# EUROPEAN PATENT APPLICATION

(11) **EP 4 556 593 A1**
(43) Date of publication of application: **21.05.2025**
(21) Application number: 23839710.3
(22) Date of filing: 14.07.2023
(51) Int. Cl.: C23C 28/00, B32B 15/18, C23C 2/12

(54) **ALUMINUM-PLATED STEEL SHEET FOR HOT STAMPING**

(30) Priority: 14.07.2022 JP 2022113179
(71) Applicant: NIPPON STEEL CORPORATION, Chiyoda-ku Tokyo 100-8071 (JP)
(72) Inventor: SUZUKI Yuki, Tokyo 100-8071 (JP); FUJITA Soshi, Tokyo 100-8071 (JP); IRIKAWA Hideaki, Tokyo 100-8071 (JP)
(74) Representative: Vossius & Partner Patentanwälte Rechtsanwälte mbB
(86) International application number: PCT/JP2023/026113
(87) International publication number: WO 2024/014543

(57) **Abstract**

An aluminum-plated steel sheet for hot stamping, including: a base steel sheet; an aluminum-plated layer provided on at least one surface of the base steel sheet; and a surface treatment film provided on the aluminum-plated layer, in which the surface treatment film contains needle-like compounds X, the needle-like compounds X contain 70% or more in number% of needle-like compounds X1 in which proportion of a major axis to a minor axis of the compound X1 is 4 or more and 50 or less and the compounds X1 have a hexagonal crystal structure, and the compounds X1 contain 70% or more in number% of a needle-like compounds X2 having a smaller angle of 0 degrees or more and 40 degrees or less among angles at an intersection point of a straight line parallel to the major axis and a straight line parallel to an aluminum-plated layer surface.

## Description

### Technical Field of the Invention

The present invention relates to an aluminum-plated steel sheet for hot stamping.
Priority is claimed on Japanese Patent Application No. 2022-113179, filed July 14, 2022, the content of which is incorporated herein by reference.

### Related Art

In recent years, there has been an increasing demand for suppressing consumption of chemical fuels for environmental protection and prevention of global warming, and the demand has affected various manufacturing industries. For example, an automobile which is essential for daily life and activities as a movement unit is also not an exception, and improvement in fuel efficiency by weight reduction of a vehicle body or the like is required. However, regarding an automobile, simply realizing weight reduction of the vehicle body may lead to deterioration in safety, which is undesirable in terms of product quality.

Therefore, in the weight reduction of the vehicle body, it is necessary to appropriately implement weight reduction after securing safety.

Many of structures of automobiles are formed by iron, in particular a steel sheet. Therefore, reducing weight of the steel sheet is effective for the weight reduction of the vehicle body. In addition, such demand for reducing the weight of the steel sheet is similarly made not only in the automobile manufacturing industries but also in various manufacturing industries. In response to such demand, if the weight of the steel sheet is simply reduced, it is conceivable to reduce a sheet thickness of the steel sheet. However, reducing the sheet thickness of the steel sheet leads to deterioration in strength of a structure. Therefore, in recent years, research and development have been conducted on a steel sheet capable of maintaining or increasing the mechanical strength of a structure constituted by the steel sheet even if the steel sheet is made thinner than a conventional steel sheet that has been used in the past by increasing the mechanical strength of the steel sheet.

In general, a material having high mechanical strength shows a tendency that shape fixability deteriorates in forming working such as bending. Therefore, when processing a material having high mechanical strength into a complicated shape, processing itself becomes difficult. One means for solving such problem regarding formability is a so-called "hot stamping method (also referred to as a hot-pressing method, a hot press method, a high temperature press method, or a die quenching method)".

In the hot stamping method, a material to be formed is heated to a high temperature to be transformed into a microstructure referred to as austenite (austenitized), and a steel sheet softened by heating is press-worked and then is cooled. According to the hot stamping method, since the material is once heated to a high temperature and softened, the material can be easily press-worked. Furthermore, the mechanical strength of the material can be enhanced by a quenching effect by cooling after forming. Therefore, by the hot stamping method, a formed article having good shape fixability and high mechanical strength can be obtained.

For example, Patent Document 1 discloses a technique for manufacturing a formed article usable as an automobile member by processing a galvannealed steel sheet by a hot stamping method.

In addition, Patent Document 2 and Patent Document 3 disclose a technique in which a film mainly composed of an organic substance such as a carbon pigment is applied on an aluminum-plated steel sheet to shorten the time for heating to a desired temperature.

### Citation List

### Patent Document

Patent Document 1: Japanese Unexamined Patent Application, First Publication No. 2003-126921
Patent Document 2: Japanese Unexamined Patent Application, First Publication No. 2011-149084
Patent Document 3: Published Japanese Translation No. 2017-518438 of the PCT International Publication

### Summary of Invention

### Problems to be Solved by the Invention

Here, in the hot stamping method described in Patent Document 1, it is necessary to heat a steel sheet to be processed to 700 to 1000°C. Therefore, it is necessary to secure a time for heating the steel sheet to a desired temperature, and improvement in productivity is insufficient.

In addition, in the aluminum-plated steel sheet described in Patent Documents 2 and 3, since the carbon pigment and the like contained in the film on the steel sheet are all organic substances, when the aluminum-plated steel sheet is heated to a high temperature range of 750°C or higher, all of the organic substances are eliminated. Therefore, also in the techniques described in Patent Document 2 and Patent Document 3, improvement in productivity is insufficient.

The present invention has been made in view of the above problems, and an object of the present invention is to provide an aluminum-plated steel sheet for hot stamping that can further improve productivity of a hot stamping member.

### Means for Solving the Problem

In order to solve the above-described problems, the present inventors have intensively studied. As a result, it has been found that, when a hot stamping member is manufactured using an aluminum-plated steel sheet for hot stamping, if a temperature rising rate at the time of the steel sheet is heated to a desired temperature (for example, Ac3 point or higher) can be increased, a heating time can be shortened, thereby making it possible to contribute to improvement in productivity. Specifically, it has been found that, when a surface treatment film provided on a plated layer contains 70% of a needle-like compound X1 in which a proportion of a major axis to a minor axis of the needle-like compound X1 is 4 or more to 50 or less and the needle-like compound X1 has a hexagonal crystal structure, and the needle-like compound X1 contains 70% or more of a needle-like compound X2 having a smallest angle of 0 degrees or more and 40 degrees or less among angles formed by a straight line parallel to the major axis and a surface of the aluminum-plated layer, the temperature rising rate can be greatly increased, and as a result, productivity can be improved.

The gist of the present invention completed based on such findings is as follows.

[1] An aluminum-plated steel sheet for hot stamping according to an aspect of the present invention is an aluminum-plated steel sheet for hot stamping, including: a base steel sheet; an aluminum-plated layer provided on at least one surface of the base steel sheet; and a surface treatment film provided on the aluminum-plated layer, in which the surface treatment film contains needle-like compounds X, the needle-like compounds X contain 70% or more in number% of needle-like compounds X1 in which a proportion of a major axis to a minor axis of the needle-like compounds X1 is 4 or more and 50 or less and the needle-like compounds X1 have a hexagonal crystal structure, and the needle-like compounds X1 contain 70% or more in number% of needle-like compounds X2 having a smallest angle of 0 degrees or more and 40 degrees or less among angles formed by a straight line parallel to the major axis and a surface of the aluminum-plated layer.
[2] In the aluminum-plated steel sheet for hot stamping according to [1], a content R of the needle-like compounds X1 may be 2% or more and 60% or less in volume%.
[3] In the aluminum-plated steel sheet for hot stamping according to [1] or [2], a carbon concentration of the needle-like compounds X1 is able to be 90 mass% or more.
[4] In the aluminum-plated steel sheet for hot stamping according to any one of [1] to [3], when the content R of the needle-like compounds X1 is measured at 10 points, the maximum content is defined as R1, and the minimum content is defined as R2, a proportion R1/R2 may be 2.0 or less.
[5] In the aluminum-plated steel sheet for hot stamping according to any one of [1] to [4], the needle-like compounds X1 may be graphite.
[6] In the aluminum-plated steel sheet for hot stamping according to any one of [1] to [5], the surface treatment film may contain a resin.

### Effects of the Invention

According to the above aspect of the present invention, it is possible to provide a steel sheet for hot stamping capable of further improving productivity of a hot stamping member.

### Brief Description of the Drawings

FIG. 1 is a schematic cross-sectional view of an aluminum-plated steel sheet for hot stamping according to an embodiment of the present invention.
FIG. 2 is a view illustrating a minor axis and a major axis of a needle-like compound.
FIG. 3 is a schematic cross-sectional view of the aluminum-plated steel sheet for hot stamping according to the embodiment of the present invention.
FIG. 4 is a schematic cross-sectional view of the aluminum-plated steel sheet for hot stamping according to the embodiment of the present invention.

### Embodiment of the Invention

Hereinafter, a preferred embodiment of the present invention will be described in detail. Note that the present invention is not limited only to the constitution disclosed in the present embodiment, and various modifications can be made without departing from the gist of the present invention. In addition, ranges of numerical value limitations described below include lower limits and upper limits in the ranges. A numerical value indicated as "more than" or "less than" is not included in the range. "%" concerning the amount of each element means "mass%".

### (Aluminum-Plated Steel Sheet for Hot Stamping)

An aluminum-plated steel sheet for hot stamping (hereinafter, also referred to as an "aluminum-plated steel sheet for HS") according to the embodiment of the present invention makes it possible to increase a temperature rising rate at the time of heating the aluminum-plated steel sheet for HS in manufacturing a hot stamping member using the aluminum-plated steel sheet for HS. That is, it is possible to improve productivity of the hot stamping member by using the aluminum-plated steel sheet for HS of the present embodiment capable of increasing the temperature rising rate during heating.

In order to improve the temperature rising rate at the time of heating the aluminum-plated steel sheet for HS, the aluminum-plated steel sheet for hot stamping of the present embodiment has a surface treatment film containing a needle-like compound on at least one surface of the plated steel sheet on which an aluminum-plated layer is formed. In the present embodiment, by applying the surface treatment film containing a predetermined needle-like compound to be described later to at least one surface of the plated steel sheet on which the aluminum-plated layer is formed as described above, it is possible to increase the temperature rising rate at the time of heating the obtained aluminum-plated steel sheet for HS. Note that the surface treatment film may be formed on both surfaces of the plated steel sheet on which the aluminum-plated layer is formed, or may be formed only on one surface. In addition, the surface treatment film may be formed on the entire surface of the plated steel sheet on which the aluminum-plated layer is formed or may be a part of the surface, but from a viewpoint of further improving productivity of the hot stamping member, the surface treatment film is preferably provided on the entire surface of the plated steel sheet on which the aluminum-plated layer is formed.

In the aluminum-plated steel sheet for hot stamping according to the present embodiment, a type of a steel sheet as a base metal (base steel sheet) is not particularly limited. Examples of the base steel sheet include various hot-rolled steel sheets and cold-rolled steel sheets. The plated steel sheet constituting the aluminum-plated steel sheet for hot stamping of the present embodiment includes a plated layer on at least one surface of such base steel sheet. Examples of the plated steel sheet include a steel sheet subjected to melt aluminum plating or the like. However, the plated layer of the present embodiment is not limited to melt aluminum plating as long as the plated layer can be applied to hot stamping.

Conventionally, most of steel sheets used as frame components for automobiles and the like are hot-rolled steel sheets, cold-rolled steel sheets, or plated steel sheets plated with aluminum, zinc, or the like. Since the conventional steel sheets have low emissivity, a temperature rising rate with respect to radiation heating is low.

In the aluminum-plated steel sheet for hot stamping of the present embodiment, a predetermined surface treatment film to be described later is applied to at least one surface of the plated layer, so that the temperature rising rate during hot stamping heating can be increased. Specifically, by heating the aluminum-plated steel sheet for HS having a predetermined surface treatment film and hot-stamping the heated aluminum-plated steel sheet for HS, productivity of the hot stamping member can be further improved.

### <Surface Treatment Film>

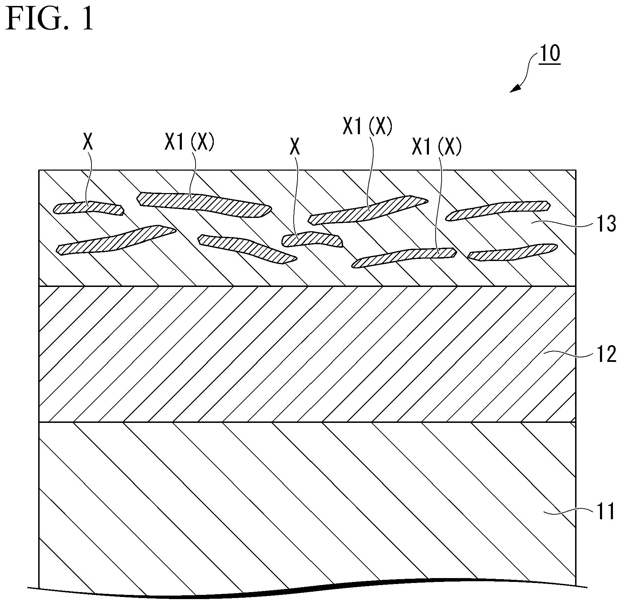

FIG. 1 is a schematic cross-sectional view of a surface portion of one surface of surfaces of the aluminum-plated steel sheet for hot stamping according to the present embodiment. Note that FIG. 1 is a schematic view for description, and dimensions and distribution states of a surface treatment film 13, an aluminum-plated layer 12, needle-like inclusions X (X1), and the like are not necessarily limited to the dimensions and the distribution states of FIG. 1, and do not necessarily indicate a preferred embodiment. Dimensions and dimensional proportions of the base steel sheet, the aluminum-plated layer, and the surface treatment film can be freely designed according to desired characteristics of the aluminum-plated steel sheet for hot stamping.

As illustrated in FIG. 1, an aluminum-plated steel sheet for hot stamping 10 according to the present embodiment includes, for example, a base steel sheet 11, the aluminum-plated layer 12 provided on at least one surface of the base steel sheet 11, and the surface treatment film 13 provided on the aluminum-plated layer 12. The surface treatment film 13 contains needle-like compounds X. In the aluminum-plated steel sheet for hot stamping 10 according to the present embodiment, the surface to which the surface treatment film 13 is applied (that is, the surface of the surface treatment film 13) has high emissivity. Therefore, the temperature rising rate during hot stamping heating is high, and as a result, productivity of the hot stamping member can be further improved.

### <<Needle-Like Compounds>>

The needle-like compounds X contained in the surface treatment film 13 contains needle-like compounds X1 in which a proportion of a major axis to a minor axis of the needle-like compound X1 is 4 or more and 50 or less and the needle-like compound X1 has a hexagonal crystal structure.

The surface treatment film 13 according to the present embodiment may further contain a binder component, various additives, and the like as necessary. The surface treatment film 13 according to the present embodiment may not contain silica or may contain silica within a certain range. Furthermore, in the present embodiment, by adjusting the amount of needle-like compounds in the surface treatment film 13, a film thickness of the surface treatment film 13, and the like, it is possible to realize improvement in the temperature rising rate at the time of hot stamping heating.

Hereinafter, the constituent requirements of the surface treatment film 13 will be described in detail.

As illustrated in FIG. 1, the surface treatment film 13 is provided on the aluminum-plated layer 12 provided on one surface or both surfaces of the base steel sheet 11. The needle-like compounds X are present in the surface treatment film 13. That is, the surface treatment film 13 contains the needle-like compounds X. As described later, a proportion of the needle-like compounds X1 and a proportion of needle-like compounds X2 in the surface treatment film 13 are important, and it is not necessary to define the content (content) of the needle-like compounds X in the surface treatment film 13. However, if necessary, the content (content) of the needle-like compounds X in the surface treatment film 13 may be 0.5% or more, 1% or more, or 2% or more in volume%, or the content (content) of the needle-like compounds X1 in the surface treatment film 13 may be defined (without defining the amount of the needle-like compounds X in the surface treatment film 13). Note that a volume% of the needle-like compounds X in the surface treatment film 13 can be measured according to a method of measuring a volume% of the needle-like compounds X1 in the surface treatment film 13 to be described later.

The proportion of the major axis to the minor axis of the needle-like compounds X1 having a hexagonal crystal structure contained in the surface treatment film 13 according to the present embodiment is 4 or more and 50 or less. The lower limit of the proportion is preferably 6 or more, and more preferably 8 or more. The upper limit of the proportion is preferably 30 or less, and more preferably 20 or less.

In general, there are six types of crystal systems in crystal structures, in which crystals are classified by symmetry: a cubic crystal system, a tetragonal crystal system, a hexagonal crystal system, an orthorhombic crystal system, a monoclinic crystal system, and a triclinic crystal system. The symmetry is highest in the cubic crystal system. The crystal system is likely to affect a shape of a compound, and in a compound of the cubic crystal system, since the symmetry is high, the compound is likely to isotropically grow in each three-dimensional axial direction. On the other hand, the hexagonal crystal system is likely to have anisotropy, and can form a needle-like compound. In other compounds such as orthorhombic or monoclinic compounds, few compounds fall within a range of the proportion of the major axis to the minor axis.

In a hexagonal compound, heat absorption from surroundings is fast. Although the reason is not clear, in the hexagonal compound, while the length of an axis of a unit lattice is the same in all three directions, two of the three axial angles are 90 degrees and the remaining one axial angle is 120 degrees, and thus it is considered that the hexagonal compound can three-dimensionally absorb heat (particularly radiation heat) from the surroundings. On the other hand, in other crystal systems, since all axial angles are 90 degrees, there is a possibility that radiation heat cannot be widely absorbed.

The needle-like compounds X1 contained in the surface treatment film 13 according to the present embodiment has the hexagonal crystal system. However, not all the needle-like compounds need to have the hexagonal crystal system, and needle-like compounds having other crystal systems may be contained. However, from a viewpoint of improving heat absorption, a proportion of the needle-like compounds X1 having the hexagonal crystal system to all the needle-like compounds contained in the film (a proportion of the needle-like compounds X1 to the needle-like compounds X) is 70% or more in number%. All the needle-like compounds may have the hexagonal crystal system.

If the proportion of the major axis to the minor axis of the needle-like compound X1 is too small, a surface area per unit volume of the needle-like compound X1 cannot be sufficiently secured, and heat absorption efficiency during heating may be insufficient. As a result, the temperature rising rate at the time of heating the aluminum-plated steel sheet cannot be sufficiently improved, and productivity may deteriorate. **In** the present embodiment, by setting the proportion of the major axis to the minor axis of the needle-like compound X1 to 4 or more, the surface area per unit volume of the needle-like compound X1 is increased and radiation heat from a heating atmosphere can be efficiently absorbed, and as a result, the temperature rising rate of the aluminum-plated steel sheet at the time of hot stamping can be increased. On the other hand, when the proportion of the major axis to the minor axis of the needle-like compound X1 is excessively large, absorption of radiation heat by other needle-like compounds present in the vicinity of the needle-like compound X1 may be hindered. As a result, the temperature rising rate at the time of heating the aluminum-plated steel sheet cannot be sufficiently improved, and productivity may deteriorate. In the present embodiment, by setting the proportion of the major axis to the minor axis of the needle-like compound X1 to 50 or less, it is possible to suppress interference of absorption of radiation heat of other needle-like compounds present in the vicinity of the other needle-like compounds, and thus heat can be efficiently absorbed in the entire film, and as a result, the temperature rising rate of the aluminum-plated steel sheet during hot stamping can be increased.

Here, the crystal system of the needle-like compound X in the surface treatment film 13 and the proportion of the major axis to the minor axis can be measured by cross-sectional analysis of the surface treatment film using a transmission electron microscope (TEM), energy dispersive X-ray spectroscopy (EDS), and electron beam diffraction.

Specifically, the needle-like compound X is selected from a TEM image obtained by observing a TEM observation sample of film thickness of film × 50 µm × (sample thickness) about 100 nm with a film cross section as an observed section, and a crystal structure such as a hexagonal crystal system can be specified from an electron beam diffraction image of the needle-like compound X. The TEM observation sample is prepared by FIB processing using a focused ion beam apparatus ("FIB NB 5000" manufactured by Hitachi High-Tech Corporation). The acceleration voltage during processing is set to 40 kV. In addition, the observed section is a cross section perpendicular to the rolling direction of the steel sheet (so-called C-section), and an observation position is adjusted to be orthogonal to the cross section during observation.

Here, the "needle-like compound X" in the present embodiment is a compound that grows largely only in one direction, a continuous compound in which a proportion of carbon concentration in EDS analysis falls within ±5 mass% is regarded as one compound, and in a proportion of a minor axis and a major axis of the compound, a compound in which the proportion of the major axis to the minor axis is 2 or more is defined as the needle-like compound X. As the needle-like compound X1 having the proportion of the major axis to the minor axis of 4 or more and 50 or less in the needle-like compound X is contained in the film, the temperature rising rate of the aluminum-plated steel sheet for hot stamping can be improved.

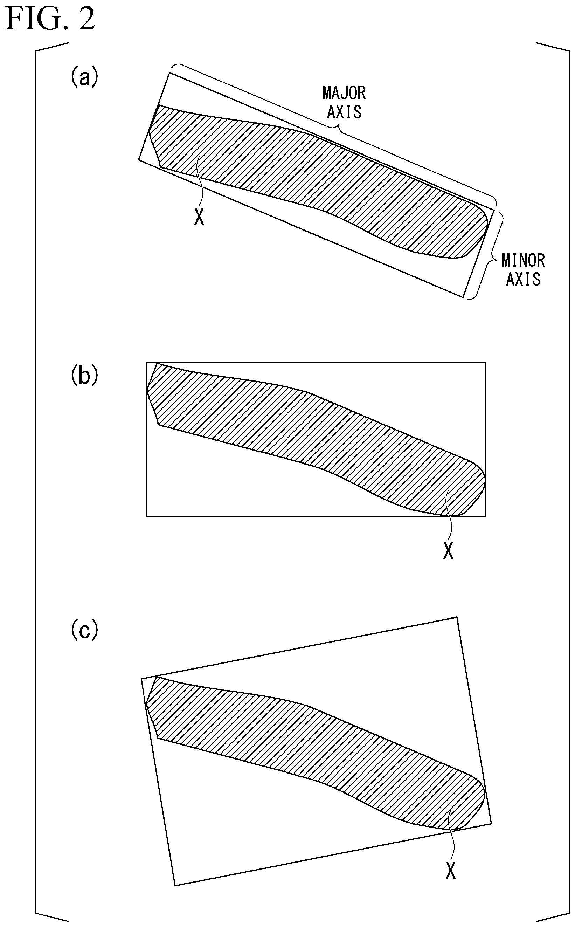

As illustrated in FIG. 2, the minor axis and the major axis can be obtained by the following procedure.

First, in the TEM image of the needle-like compound X, a continuous compound having a contrast different from the surroundings and having a C concentration of ±5 mass% in the EDS analysis is determined as one needle-like compound X. Next, among rectangles circumscribing the particles illustrated in (a) to (c) of FIG. 2, in a rectangle having the smallest area ((a) in the case of FIG. 2), a short side and a long side are defined as the minor axis and the major axis, respectively. Note that, for example, a needle-like compound having a C concentration within a range of 0 to 10 mass% satisfies a requirement regarding the C concentration described above, and thus, a needle-like compound having a contrast different from the surroundings and continuous in the TEM image is determined as one needle-like compound X.

Further, in the surface treatment film 13 according to the present embodiment, among the hexagonal needle-like compounds X1 having the proportion of the major axis to the minor axis of 4 or more and 50 or less, the proportion of the needle-like compounds X2 in which a smallest angle α is 0 degrees or more and 40 degrees or less among angles formed by a straight line parallel to the major axis and a surface of the plated layer 12 (the proportion of the needle-like compound X2 to the needle-like compound X1) is 70% or more in number%. When the smallest angle α among the angles formed by the straight line parallel to the major axis of the needle-like compound X1 and the plated layer surface exceeds 40 degrees, the absorption of radiation heat is insufficient, and the temperature rising rate is not increased. This is presumed to be because when the angle α exceeds 40 degrees, electromagnetic waves including infrared light are not absorbed by the needle-like compound X1, reach aluminum plating having a low radiation factor, and are reflected. Therefore, in order to increase the temperature rising rate of the aluminum-plated steel sheet for HS, it is effective to sufficiently increase the proportion of the needle-like compounds X2 having the angle α of 0 degrees or more and 40 degrees or less in the needle-like compounds X1 in the surface treatment film 13. The proportion of the needle-like compounds X2 may be 100% (that is, the angle α of all the needle-like compounds X1 is 0 degrees or more and 40 degrees or less). Note that the angle α in the present embodiment can be measured from the TEM image obtained by observing the above-described TEM observation sample (film thickness of film × 50 µm × (sample thickness) about 100 nm).

Note that, when the straight line parallel to the major axis of the needle-like compound X1 is defined as a straight line A, the smallest angle α among the angles formed by the straight line parallel to the major axis of the needle-like compound X1 and the plated surface can be referred to as a smaller angle among angles formed by an intersection line B between a surface Z and the plated surface and the straight line A in the surface Z perpendicular to the plated surface and including the straight line A.

The proportion of the needle-like compounds X1 is determined by the following method.

Any 10 needle-like compounds X are selected from compounds determined to be the needle-like compounds X by the above-described method using the above-described TEM observation sample (film thickness of film × 50 µm × (sample thickness) about 100 nm), and the number proportion (number%) of the needle-like compounds X1, in which the proportion of the major axis to the minor axis of the needle-like compounds X1 is 4 or more and 50 or less and the needle-like compounds X1 has the hexagonal crystal structure, is determined from the 10 needle-like compounds X. Specifically, 10 compounds are freely selected from compounds determined to be the needle-like compounds X, and among the 10 compounds, when there are seven needle-like compounds X1 in which the proportion of the major axis to the minor axis is 4 or more and 50 or less and the needle-like compounds X1 has the hexagonal crystal structure, the proportion of the needle-like compounds X1 in the region is 70%. Such measurement is repeated 10 times, and the obtained proportions of the needle-like compounds X1 are averaged to calculate the proportion (number%) of the needle-like compounds X1 in the surface treatment film 13.

The proportion of the needle-like compounds X2 is determined by the following method.

Any 40 needle-like compounds X1 are selected from compounds determined to be the needle-like compounds X1 by the above-described method using the above-described TEM observation sample (film thickness of film × 50 µm × thickness of 100 nm), and among the compounds, the number proportion (number%) of the needle-like compounds X2 in which the angle α is 0 degrees or more and 40 degrees or less is determined. Specifically, 40 compounds are freely selected from compounds determined to be the needle-like compounds X, and when there are 30 needle-like compounds X2 in which the angle α is 0 degrees or more and 40 degrees or less, the proportion of the needle-like compound X2 in the region is 75%. By the measurement, the proportion (number%) of the needle-like compounds X2 in the surface treatment film 13 is calculated.

Here, the needle-like compounds X1 contained in the surface treatment film 13 have the hexagonal crystal structure as described above. That is, the needle-like compounds X1 are not amorphous compounds typified by carbon black but crystalline compounds. When the amorphous compounds are applied as the needle-like compounds X1, the temperature rising rate during hot stamping cannot be sufficiently improved, and it may be difficult to secure adhesion of the surface treatment film.

Examples of the compound having the hexagonal crystal structure include lanthanum silicate, magnesium diboride, beryllium oxide (beryllia), zinc oxide, graphite (C), β-quartz, needle nickel ore (NiS), and wurtzite (ZnS).

The reason why the temperature rising rate during hot stamping is improved by containing the compound having the hexagonal crystal structure in the film is not clear, but it is considered that one of the reasons is that there are many active bonds with respect to infrared light having a wavelength of 1 to 10 µm which are particularly effective for absorption of radiation heat.

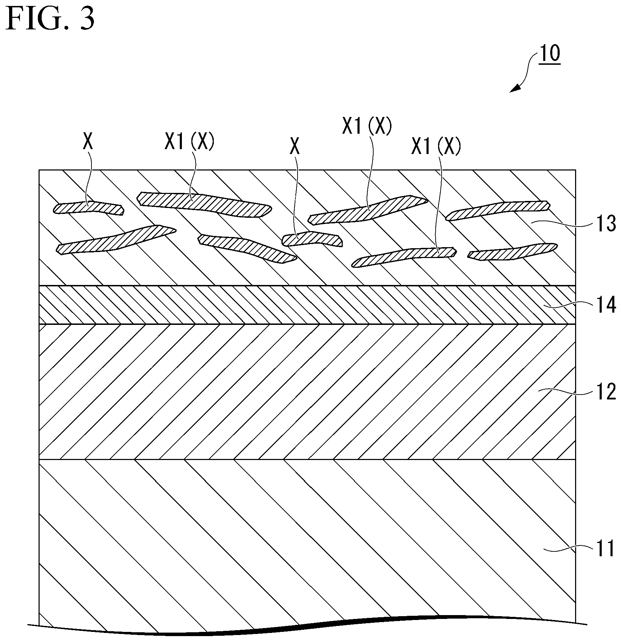

As illustrated in FIG. 3, a base treatment film 14 may be provided below the surface treatment film 13 (between the surface treatment film 13 and the aluminum-plated layer 12). Thus, the adhesion of the surface treatment film 13 on the upper layer side to the aluminum-plated layer 12 can be improved. Here, as the base treatment film 14, for example, there is a film containing elements such as carbon, oxygen, hydrogen, nitrogen, silicon, and sodium such as a silane coupling agent, and there is the surface treatment film 13 containing a needle-like compound having the hexagonal crystal structure on the upper layer of the base treatment film 14. Note that FIG. 3 is a simple schematic view for description, and dimensions and distribution states of the surface treatment film 13, the base treatment film 14, the aluminum-plated layer 12, the needle-like inclusion X (X1), and the like are not necessarily limited to the dimensions and the distribution states of FIG. 3, and do not necessarily indicate a preferred embodiment.

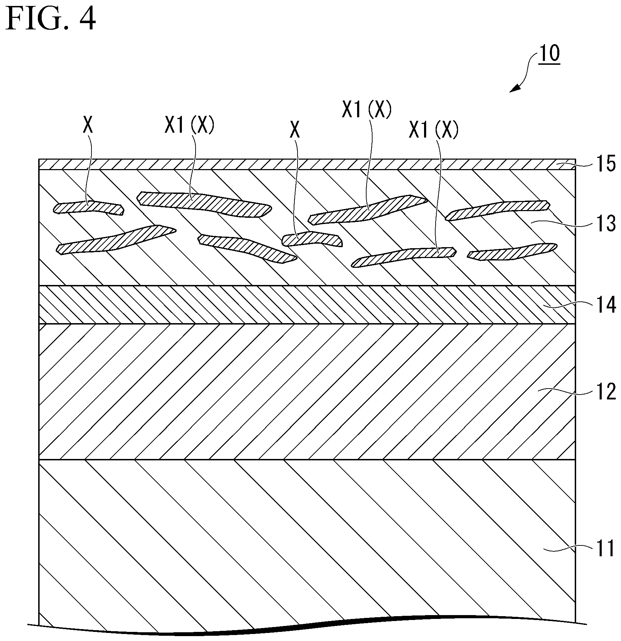

For the purpose of further improving corrosion resistance of the surface treatment film 13, a film 15 may be present on an upper layer of the surface treatment film 13. Examples of the film 15 include a resin film such as a polyester resin or a polyurethane resin that does not contain an inorganic component such as silicon or metal, or that contains only a small amount of the inorganic component. When a resin film is present as the film 15, as illustrated in FIG. 4, it is preferable that the base treatment film 14 is present on the aluminum-plated layer 12, the surface treatment film 13 is present on the base treatment film 14, and the resin film is present on the surface treatment film 13. Note that FIG. 4 is a simple schematic view for description, and dimensions and distribution states of the film 15, the surface treatment film 13, the base treatment film 14, the aluminum-plated layer 12, the needle-like inclusion X (X1), and the like are not necessarily limited to the dimensions and the distribution states of FIG. 4, and do not necessarily indicate a preferred embodiment.

The surface treatment film 13 according to the present embodiment can contain various binder components and additives in addition to the needle-like compounds. The surface treatment film 13 preferably contains, for example, a resin and a pigment. In addition to such components, the surface treatment film 13 may contain additives such as a leveling agent, an antifoaming agent, a coloring agent, a viscosity modifier, and an ultraviolet absorber. Note that a coating solution for forming the surface treatment film 13 is preferably obtained by dispersing or dissolving the above-mentioned components in water or a solvent.

In the present embodiment, specific methods for applying the surface treatment film 13 include methods such as coating and lamination, but the present invention is not limited to such methods. The surface treatment film 13 may be applied only to one surface of the steel sheet or to both surfaces of the steel sheet.

When the surface treatment film 13 is applied to the entire surface of the aluminum-plated layer 12 by coating, first, for example, an organic or inorganic treatment liquid containing needle-like compounds is prepared, in which the proportion of the major axis to the minor axis of the needle-like compound is 4 or more and 50 or less and the needle-like compound has a hexagonal crystal structure. Thereafter, the entire surface of the aluminum-plated layer 12 is coated with the treatment liquid with a roll coater, a curtain coater, an inkjet, or the like, and then a volatile component in the treatment liquid is dried such that the surface treatment film 13 is applied. In particular, inkjet coating is preferable because the film thickness can be continuously changed.

Herein, conventionally (for example, in Patent Document 2 and the like), when an organic substance such as a carbon pigment is contained in the surface treatment film, there is a problem in that, when a plated steel sheet is heated to a high temperature range (for example, 750°C or higher), all of the organic substances are eliminated. However, the present inventors have found that, in the case of the surface treatment film 13 according to the present embodiment, the organic compound except for the needle-like compounds X1 having the hexagonal crystal structure can be heated to a high temperature range without being eliminated. A mechanism by which the organic substance can be heated to a high temperature range without being eliminated as described above is not clear, but it is presumed that by optimizing the proportion of the major axis to the minor axis of the needle-like compound contained in the film, the organic substance used as the treatment liquid is changed to a structure that can withstand even in a high temperature range.

The aluminum-plated steel sheet for hot stamping 10 according to the present embodiment includes the surface treatment film 13 having the above characteristics, so that the temperature rising rate during hot stamping can be improved. Therefore, by using the aluminum-plated steel sheet for hot stamping 10 according to the present embodiment as a material, the productivity of hot stamped materials can be improved.

In order to realize the above-described surface treatment film 13, a characteristic substance contained in the surface treatment film 13 (the needle-like compounds) will be described in more detail below.

### [Content R of Needle-Like Compound X1]

A content R of the needle-like compounds X1 having the hexagonal crystal structure in the surface treatment film 13 is preferably 0.5 volume% or more or 1 volume% or more on the surface of the aluminum-plated layer 12 to which the surface treatment film 13 is applied. By setting the content R to 1 volume% or more, it is possible to sufficiently increase the temperature rising rate during hot stamping. The content R is preferably 2 volume% or more, more preferably 5 volume% or more, and still more preferably 10 volume% or more. The content R is preferably 60 volume% or less. When the content is 60 volume% or less, an electrical attraction between the binder component of the surface treatment film 13 and the surface of the aluminum-plated layer 12 serving as a substrate can be secured, and adhesion can be enhanced. The content R is preferably 40 volume% or less, and more preferably 20 volume% or less.

The content R is a volume percentage (volume%) of the needle-like compounds X1 in the surface treatment film 13 in the TEM image, and can be determined by the following procedure. The volume of each needle-like compound X1 is calculated from dimensions of each needle-like compound X1 in a TEM observation region (for example, a minor axis corresponding to a diameter of the needle-like compound X1 and a major axis corresponding to a length of the needle-like compound X1), and a volume in total is divided by a volume of an observation region (visual field area × thickness) to calculate the volume percentage of the needle-like compounds X1. Such measurement is repeated 10 times, and the average of 10 visual fields of the volume percentage is taken as the content R.

### [Minor Axis of Needle-Like Compound X1]

The minor axis of the needle-like compound X1 contained in the surface treatment film 13 is preferably 20 nm or more. The thickness of the surface treatment film 13 may be locally different depending on roughness and waviness of the base steel sheet, a difference of a volatilization speed of a volatile component such as water in the treatment liquid during film formation, and the like. Here, when the minor axis of the needle-like compound X1 is 20 nm or more, radiation heat can be efficiently absorbed by the surface treatment film 13 preferably. The minor axis of the needle-like compound X1 is preferably 2 µm or less. When the minor axis is 2 µm or less, a contact point between the aluminum-plated steel sheet of the substrate and an electrode is easily secured during welding after hot stamping, and spot weldability can be improved. The minor axis is preferably 30 nm or more or 60 nm or more, or 1 µm or less, 700 nm or less, or 500 nm or less.

### [Major Axis of Needle-Like Compound X1]

The major axis of the needle-like compound X1 contained in the surface treatment film 13 is preferably 80 nm or more. When the major axis of the needle-like compound X1 is 80 nm or more, the radiation heat can be efficiently absorbed by the surface treatment film 13 preferably, similarly to the reason of the minor axis. The major axis of the needle-like compound X1 is preferably 100 µm or less. When the major axis is 100 µm or less, similarly to the reason of the minor axis, the contact point between the aluminum-plated steel sheet of the substrate and the electrode is easily secured during welding after hot stamping, and spot weldability can be improved preferably. The major axis is preferably 150 nm or more or 300 nm or more, or 50 µm or less, 20 µm or less, or 10 µm or less.

### [Carbon Concentration of Needle-Like Compound X1]

A carbon concentration of the needle-like compound X1 is more preferably 90 mass% or more. When the carbon concentration is 90 mass% or more, even if the temperature rises during hot stamping, elimination of the needle-like compound X1 from the film due to decomposition or the like can be delayed, and a function of absorbing heat can be maintained even in a high temperature region. Furthermore, when the carbon concentration of the needle-shaped compound X1 is 90 mass% or more, a reaction between the needle-like compound X1 and oxygen in the atmosphere becomes an exothermic reaction, so that the temperature rising rate can be further increased. The carbon concentration is preferably 90 mass% or more. The carbon concentration can be determined from a measured value of EDS. That is, a spectrum of a characteristic X-ray during electron beam irradiation is measured, and detection strength for each energy is calculated. An element composing the needle-like compound can be specified from an energy value, and the concentration of the element can be calculated from the detection strength. By such method, the original concentration of carbon or the like composing the needle-like compound X1 can be analyzed. The carbon concentration of the needle-like compound X1 obtained as such is preferably 100 mass% or less. As the carbon concentration is 100 mass% or less, the exothermic reaction proceeds and an effect of further increasing the temperature rising rate is expected.

### [Dispersion Degree of Needle-Like Compounds X1]

When a form of compounds in the surface treatment film is a needle shape, a surface area per unit volume of the compound is large. Therefore, when the aluminum-plated steel sheet according to the present embodiment is heated to manufacture a hot stamping member, heat can be efficiently absorbed by the entire surface treatment film by radiation of electromagnetic waves from the heated atmosphere. In addition, heat can be efficiently absorbed also by heat conduction due to contact with the heated atmosphere gas. As a result, the entire surface treatment film can be quickly heated without unevenness. In order to obtain such an effect, it is effective that the form of the compounds in the film is a needle shape in which the proportion of the major axis to the minor axis of the needle-like compound X1 is 4 or more and 50 or less, and such needle-like compounds X1 are dispersed in the entire surface treatment film.

A dispersion degree of the needle-like compounds X1 is calculated using data during measurement of the proportion of the needle-like compounds X1 described above. Specifically, during measurement of the proportion of the needle-like compounds X1 described above, the operation of measuring the proportion of the needle-like compounds X1 in random 10 needle-like compounds X is repeated 10 times, and an absolute maximum value of the proportion (content) of the 10 needle-like compounds X is defined as R1, and an absolute minimum value of the proportion (content) is defined as R2. Then, the proportion of R1 to R2 (R1/R2) is defined as the dispersion degree of the needle-like compound X1. In the present embodiment, by dispersing the needle-like compounds X1 in the film so that R1/R2 is 2.0 or less, the temperature rising rate of the aluminum-plated steel sheet for hot stamping can be further improved. When R1/R2 exceeds 2.0, variation occurs in the absorption of radiation heat, and thus there is a concern that variation may also occur in an effect of improving the temperature rising rate. Therefore, R1/R2 is preferably 2.0 or less. R1/R2 may be 2.5 or less or 2.3 or less, or 1.8 or less or 1.6 or less. Note that R1/R2 is affected by a time until reaching 60°C during drying after coating in the manufacturing method of the present embodiment. Specifically, R1/R2 can be controlled within the above range by adjusting the reaching time to 10.0 seconds or less. From the definition of R1/R2, the lower limit of R1/R2 is 1.0.

### [Composition of Needle-Like Compounds X1]

The needle-like compounds X1 contained in the surface treatment film 13 are preferably graphite. When graphite is contained in the surface treatment film 13, a film component is reduced after hot stamping heating, and performance after hot stamping such as adhesion after coating can be maintained.

In the case of graphite, decomposition occurs slowly due to the small number of functional groups. On the other hand, carbon black, which is a similar carbon-based compound, has a relatively large number of functional groups, and thus has a characteristic that decomposition and oxidation reaction are likely to occur from early time.

When the amount of graphite in the surface treatment film 13 is 5.0 volume% or more, the emissivity of the aluminum-plated steel sheet can be increased, and the temperature rising rate can be increased. The amount of graphite in the surface treatment film 13 is more preferably 8.0 volume% or more. When the amount of graphite in the surface treatment film 13 is 8.0 volume% or more, the temperature rising rate can be further increased.

Here, "graphite" in the present embodiment refers to a material having a carbon concentration (C concentration) of 85 mass% or more.

On the other hand, when the amount of graphite in the surface treatment film 13 is 40.0 volume% or less, it is possible to suppress an increase in film cost while sufficiently obtaining the effect of increasing emissivity. The amount of graphite in the surface treatment film is preferably 30.0 volume% or less. When the amount of graphite in the surface treatment film 13 is 30.0 volume% or less, the film cost can be further suppressed.

The amount of graphite can be determined by the same method as the content R of the needle-like compounds X1 described above except that a limitation that the C concentration is 85% or more is added during measurement of the proportion (content) of the needle-like compounds X1 in the needle-like compound X.

### <<Binder Component (Resin)>>

The amount of the binder component that can be contained in the surface treatment film 13 according to the present embodiment is preferably 40 volume% or more with respect to the total volume of the surface treatment film 13 in order to ensure film adhesion.

Various known resins can be used as the binder component.

The resin is not particularly limited. Examples thereof include a polyurethane resin, a polyester resin, an acrylic resin, an epoxy resin, a fluororesin, a polyamide resin, a polyolefin resin, and a polymer compound obtained by hydrolysis and condensation polymerization of a silane coupling agent. Examples of the resin include a resin obtained by crosslinking such resins with a crosslinking agent component such as a butylated melamine resin, a methylated melamine resin, a butylmethyl-mixed melamine resin, a urea resin, an isocyanate resin, or a mixture thereof. In addition, examples also include an electron beam curable resin and an ultraviolet curable resin. Among the examples, the binder resin is preferably any one or more of a polyester resin, an epoxy resin, an acrylic resin, and a urethane resin. The binder resins may be used alone or as a mixture of two or more types.

For example, when a polyurethane resin is used as the binder component, the polyurethane resin is preferably a polyether-based polyurethane resin. This is because the use of the polyether-based polyurethane resin can prevent the occurrence of hydrolysis due to acid or alkali as compared with a polyester-based polyurethane resin, and adhesion during processing and corrosion resistance of the processed portion can be secured by suppressing formation of a hard and brittle film as compared with a polycarbonate-based polyurethane resin.

Whether the polyurethane resin is contained can be determined based on whether characteristic absorption at 3330 cm⁻¹ (N-H stretching), 1730 cm⁻¹ (C=O stretching), 1530 cm⁻¹ (C-N), and 1250 cm⁻¹ (C-O) is observed in an infrared absorption spectrum obtained by infrared spectroscopy. As for the amount of the polyurethane resin, a calibration curve showing a relationship between the content and a strength of characteristic absorption is prepared using a sample of which the content is known in advance, so that the content can be specified from the obtained strength of characteristic absorption.

In addition, it is possible to determine the presence and the amount of resins other than the polyurethane resin similarly to the polyurethane resin by focusing on characteristic absorption derived from functional groups specific to each resin.

As a component in the treatment liquid for dispersing or dissolving the resin, water or a solvent can be used.

<<Additive>>

The surface treatment film 13 according to the present embodiment can contain various additives such as a leveling agent, a water-soluble solvent, a metal stabilizer, and an etching inhibitor as an additive during preparation of a treatment liquid before film formation as long as the effects of the present invention are not impaired.

Examples of the leveling agent include polyethylene oxide or a polypropylene oxide adduct and an acetylene glycol compound, as nonionic or cationic surfactants.

Examples of the water-soluble solvent include alcohols such as ethanol, isopropyl alcohol, t-butyl alcohol, and propylene glycol, cellosolves such as ethylene glycol monobutyl ether and ethylene glycol monoethyl ether, esters such as ethyl acetate and butyl acetate, and ketones such as acetone, methyl ethyl ketone and methyl isobutyl ketone.

Examples of the metal stabilizer include chelate compounds such as ethylenediaminetetraacetic acid (EDTA) and diethylenetriaminepentaacetic acid (DTPA).

Examples of the etching inhibitor include amine compounds such as ethylenediamine, triethylenepentamine, guanidine, and pyrimidine.

Note that contents of the binder component and the additive can also be measured similarly to the case of the needle-like compound.

### <<Silica>>

As described above, the surface treatment film 13 according to the present embodiment may not contain silica or may contain silica within a certain range. More specifically, in the surface treatment film 13 according to the present embodiment, the amount of silica may be 0 to 0.3 g/m². When silica is contained in an amount exceeding 0.3 g/m², the effect of increasing temperature cannot be expected and the cost becomes high, which is not preferable from the viewpoint of economic efficiency. As silica is a substance having low electrical conductivity, when silica is contained in an amount exceeding 0.3 g/m², it is not preferable in terms of weldability after hot stamping. The amount of silica in the surface treatment film 13 when silica is contained is preferably as small as possible. The amount of silica in the surface treatment film is more preferably 0.10 g/m² or less, and still more preferably 0.05 g/m² or less.

### <<Film Thickness of Surface Treatment Film>>

An average film thickness of the surface treatment film 13 containing the above components is preferably, for example, 0.5 to 15.0 µm. When the average film thickness of the surface treatment film 13 is less than 0.5 µm, the temperature rising rate during hot stamping cannot be sufficiently increased. On the other hand, when the average film thickness of the surface treatment film 13 exceeds 15.0 µm, the effect of increasing the temperature rising rate during hot stamping is saturated, but the production cost increases, which is economically disadvantageous. In addition, when an attempt is made to increase the film thickness of the surface treatment film 13, it takes time to dry the surface treatment film 13 after coating of the treatment agent during formation of the surface treatment film, so that productivity deteriorates. By setting the film thickness of the surface treatment film 13 within the above range, the temperature rising rate can be improved. The average film thickness of the surface treatment film is more preferably 1.0 µm or more or 2.0 µm or more, and 12 µm or less, 10 µm or less, or 7.0 µm or less.

### <Base Treatment Film>

The base treatment film 14 (chemical conversion treatment layer) may be provided between the surface treatment film 13 and the aluminum-plated layer 12 in order to improve adhesion of the surface treatment film 13.

The base treatment film 14 may contain any one or more selected from a resin, a silane coupling agent, a zirconium compound, silica, phosphoric acid and a salt thereof, fluoride, and a vanadium compound. When such substances are contained, film formability after coating of the chemical conversion treatment agent for the base treatment film 14, a barrier property (denseness) of the film against corrosion factors such as moisture and an ion having a corrosive property, film adhesion to the plated surface, and the like are further improved, which contributes to raising corrosion resistance of the film. **In** particular, when the base treatment film 14 contains any one or more of a silane coupling agent and a zirconium compound, a crosslinked structure is formed in the film, and bonding with a plated surface is further strengthened, so that the adhesion and the barrier property of the film can be enhanced.

When the base treatment film 14 contains any one or more of silica, phosphoric acid and a salt thereof, fluoride, and a vanadium compound, corrosion resistance can be improved by forming a precipitated film or a passive film as an inhibitor on a plated surface or a surface of a base steel sheet.

### [Adhesion Amount of Base Treatment Film per One Surface of Plated Layer]

The adhesion amount of the base treatment film 14 per one surface of the plated layer is preferably 10 to 1000 mg/m² in terms of solid content. When the amount is less than 10 mg/m², sufficient working adhesion and corrosion resistance are not secured, and when the amount is more than 1000 mg/m², working adhesion may deteriorate.

The adhesion amount of the base treatment film 14 per one surface of the plated steel sheet is more preferably 20 to 800 mg/m², and still more preferably 50 to 600 mg/m².

### <Aluminum-Plated Layer>

The aluminum-plated steel sheet for hot stamping 10 according to the present embodiment includes the aluminum-plated layer 12 on at least a portion of at least one surface of the base steel sheet 11 in which the portion is between the base steel sheet 11 and the surface treatment film 13. By including the aluminum-plated layer 12, corrosion resistance after coating after hot stamping can be further improved. In addition, the presence of the aluminum-plated layer 12 can prevent iron scale from being generated by heating during hot stamping. Iron scale becomes a manufacturing load because iron scale contaminates a heating furnace or adheres to a roll used for conveyance. Therefore, when iron scale is generated, a step such as shot blasting is required to remove the iron scale, which is not economically preferable.

### <Base Steel Sheet>

Next, the base steel sheet 11 of the aluminum-plated steel sheet for hot stamping 10 according to the present embodiment will be described. The base steel sheet 11 is not particularly limited as long as the base steel sheet 11 is a steel sheet that can be suitably used for the hot stamping method. As a steel sheet applicable to the aluminum-plated steel sheet for hot stamping according to the present embodiment, a steel sheet having a chemical composition of, for example, in mass%,
C: 0.03 to 0.60%,
Si: 0.01 to 0.60%,
Mn: 0.50 to 3.00%,
P: 0.050% or less,
S: 0.020% or less,
Al: 0.100% or less,
Ti: 0.01 to 0.10%,
B: 0.0001 to 0.0100%,
N: 0.010% or less,
Cr: 0 to 1.00%,
Ni: 0 to 2.00%,
Cu: 0 to 1.000%,
Mo: 0 to 1.00%,
V: 0 to 1.00%,
Nb: 0 to 1.00%,
Sn: 0 to 1.00%,
W: 0 to 1.00%,
Ca: 0 to 0.010%,
REM: 0 to 0.30%, and
remainder: Fe and impurities can be exemplified.

Examples of the form of the base steel sheet 11 include a steel sheet such as a hot-rolled steel sheet or a cold-rolled steel sheet. Hereinafter, the chemical composition of the base steel sheet will be described in detail. In the following description of the chemical composition of the base steel sheet 11, the expression "%" means "mass%" unless otherwise specified.

### [C: 0.03 to 0.60%]

C is contained to ensure the intended mechanical strength. When the C content is 0.03% or more, sufficient improvement in mechanical strength is obtained, and the effect of containing C is sufficiently obtained.

Therefore, the C content is preferably 0.03% or more. The C content is more preferably 0.20% or more. Meanwhile, when the C content is 0.60% or less, it is possible to suppress deterioration in elongation and drawing while improving the strength of the steel sheet. Therefore, the C content is preferably 0.60% or less. The C content is more preferably 0.40% or less.

### [Si: 0.01 to 0.60%]

Si is one of strength improving elements for improving mechanical strength, and is contained in order to secure the intended mechanical strength, similarly to C. When the Si content is 0.01% or more, the strength improving effect is sufficiently exhibited, and the mechanical strength is sufficiently improved. Therefore, the Si content is preferably 0.01% or more. The Si content is more preferably 0.10% or more. Meanwhile, since Si is also an easily oxidized element, when the Si content is 0.60% or less, deterioration in wettability at the time of melt Al plating due to the influence of an oxide of Si formed on the surface layer of the steel sheet is suppressed, and occurrence of bare spots can be suppressed. Therefore, the Si content is preferably 0.60% or less. The Si content is more preferably 0.40% or less.

### [Mn: 0.50 to 3.00%]

Mn is one of strengthening elements that strengthen steel, and is also one of elements that enhance hardenability. Furthermore, Mn is an element effective for preventing hot embrittlement due to S which is one of impurities. When the Mn content is 0.50% or more, such effects can be sufficiently obtained. Therefore, in order to reliably exhibit the above effects, the Mn content is preferably 0.50% or more. The Mn content is more preferably 0.80% or more. Meanwhile, since Mn is an austenite forming element, when the Mn content is 3.00% or less, the residual austenite phase does not excessively increase, and deterioration in strength is suppressed. Therefore, the Mn content is preferably 3.00% or less. The Mn content is more preferably 1.50% or less.

### [P: 0.050% or less]

P is an impurity contained in steel. When a P content is 0.050% or less, it is possible to prevent P contained in a steel sheet from segregating at a grain boundary of the steel sheet and reducing toughness of a base metal of a hot-stamped formed body, and it is possible to suppress deterioration in delayed fracture resistance of the steel sheet. Therefore, the P content is preferably 0.050% or less, and the P content is preferably as small as possible. If necessary, the P content may be 0.045% or less or 0.040% or less. The lower limit of the P content is 0%, but the lower limit may be 0.001% or 0.005%.

### [S: 0.020% or less]

S is an impurity contained in steel. When an S content is 0.020% or less, it is possible to prevent S contained in the steel sheet from forming sulfide and reducing toughness of the steel sheet, and it is possible to suppress deterioration in delayed fracture resistance of the steel sheet. Therefore, the S content is preferably 0.020% or less, and the S content is preferably as small as possible. If necessary, the S content may be 0.015% or less or 0.010% or less. The lower limit of the S content is 0%, but the lower limit may be 0.001% or 0.002%.

### [Al: 0.100% or less]

Al is generally used for deoxidizing steel. Meanwhile, when the Al content is 0.100% or less, an increase in the Ac3 point of the steel sheet is suppressed, so that the heating temperature required for ensuring hardenability of the steel at the time of hot stamping can be reduced, which is desirable in terms of hot stamping manufacture. Therefore, the Al amount of the steel sheet is preferably 0.100% or less, more preferably 0.050% or less, and still more preferably 0.010% or less.

### [Ti: 0.01 to 0.10%]

Ti is one of the strengthening elements. When the Ti content is 0.01% or more, a strength improving effect and an oxidation resistance improving effect can be sufficiently obtained. Therefore, in order to reliably exhibit the above effects, the Ti content is preferably 0.01% or more. The Ti content is more preferably 0.03% or more. Meanwhile, when the Ti content is 0.10% or less, for example, formation of carbides and nitrides is suppressed, softening of steel can be suppressed, and the intended mechanical strength can be sufficiently obtained. Therefore, the Ti content is preferably 0.10% or less. The Ti content is more preferably 0.08% or less.

### [B: 0.0001 to 0.0100%]

B acts during quenching and has an effect of improving strength. When the B content is 0.0001% or less, such strength improving effect can be sufficiently obtained. Therefore, the B content is preferably 0.0001% or more. The B content is more preferably 0.0010% or more. Meanwhile, when the B content is 0.0100% or less, formation of inclusions is reduced, embrittlement of the steel sheet is suppressed, and deterioration in fatigue strength can be suppressed. Therefore, the B content is preferably 0.0100% or less. The B content is more preferably 0.0040% or less.

### [N: 0.010% or less]

N is an impurity contained in steel. When the N content is 0.010% or less, formation of nitrides due to N contained in the steel sheet is suppressed, and deterioration in toughness of the steel sheet can be suppressed. Further, when B is contained in the steel sheet, N contained in the steel sheet is prevented from bonding with B and reducing the amount of B in solid solution, and deterioration in hardenability improving effect of B can be suppressed. Therefore, the N content is preferably 0.010% or less, and the N content is more preferably as small as possible.

The base steel sheet of the steel sheet for hot stamping according to the present embodiment may further contain, as an optional element, one or more elements selected from the group consisting of Cr, Mo, Ni, Cu, Mo, V, Nb, Sn, W, Ca, and REM. The lower limit of the contents of such elements is 0%.

### [Cr: 0 to 1.00%]

Cr is an element that improves hardenability of the steel sheet. In order to sufficiently obtain such effect, the Cr content is preferably 0.01% or more. Meanwhile, when the Cr content is 1.00% or less, it is possible to suppress an increase in cost while sufficiently obtaining the effect. Therefore, the Cr content when contained is preferably 1.00% or less. If necessary, the Cr content may be 0.70% or less or 0.50% or less.

### [Ni: 0 to 2.00%]

Ni is an element capable of enhancing hardenability of steel and stably securing strength of a steel sheet member after quenching. In order to sufficiently exhibit such effect, the Ni content is preferably 0.10% or more. Meanwhile, when the Ni content is 2.00% or less, economic efficiency is enhanced while the above effect is sufficiently obtained. Therefore, the Ni content when contained is preferably 2.00% or less. If necessary, the Ni content may be 1.20% or less, 0.80% or less, or 0.50% or less.

### [Cu: 0 to 1.000%]

Cu is an element capable of enhancing hardenability of steel and stably securing strength of a steel sheet member after quenching. Cu also improves pitting corrosion resistance in a corrosive environment. In order to sufficiently exhibit such effects, the Cu content is preferably 0.100% or more. Meanwhile, when the Cu content is 1.000% or less, economic efficiency is enhanced while the above effects are sufficiently obtained. Therefore, the Cu content when contained is preferably 1.000% or less. If necessary, the Cu content may be 0.600% or less, 0.400% or less, or 0.200% or less.

### [Mo: 0 to 1.00%]

Mo is an element capable of enhancing hardenability of steel and stably securing strength of a steel sheet member after quenching. In order to sufficiently exhibit such effect, the Mo content is preferably 0.10% or more. Meanwhile, when the Mo content is 1.00% or less, economic efficiency is enhanced while the above effect is sufficiently obtained. Therefore, the Mo content when contained is preferably 1.00% or less. If necessary, the Mo content may be 0.60% or less, 0.40% or less, or 0.20% or less.

### [V: 0 to 1.00%]

V is an element capable of enhancing hardenability of steel and stably securing strength of a steel sheet member after quenching. In order to sufficiently exhibit such effect, the V content is preferably 0.10% or more. Meanwhile, when the V content is 1.00% or less, economic efficiency is enhanced while the above effect is sufficiently obtained. Therefore, the V content when contained is preferably 1.00% or less. If necessary, the V content may be 0.60% or less, 0.40% or less, or 0.20% or less.

### [Nb: 0 to 1.00%]

Nb is an element capable of enhancing hardenability of steel and stably securing strength of a steel sheet member after quenching. In order to sufficiently exhibit such effect, the Nb content is preferably 0.01% or more. Meanwhile, when the Nb content is 1.00% or less, economic efficiency is enhanced while the above effect is sufficiently obtained. Therefore, the Nb content when contained is preferably 1.00% or less. If necessary, the Nb content may be 0.50% or less, 0.20% or less, or 0.10% or less.

### [Sn: 0 to 1.00%]

Sn is an element that improves pitting corrosion resistance in a corrosive environment. In order to sufficiently exhibit such effect, the Sn content is preferably 0.01% or more. Meanwhile, when the Sn content is 1.00% or less, deterioration in grain boundary strength is suppressed, and deterioration in toughness can be suppressed. Therefore, the Sn content when contained is preferably 1.00% or less. If necessary, the Sn content may be 0.40% or less, 0.10% or less, or 0.05% or less.

### [W: 0 to 1.00%]

W is an element capable of enhancing hardenability of steel and stably securing strength of a steel sheet member after quenching. W also improves pitting corrosion resistance in a corrosive environment. In order to sufficiently exhibit such effects, the W content is preferably 0.01% or more. Meanwhile, when the W content is 1.00% or less, economic efficiency is enhanced while the above effects are sufficiently obtained. Therefore, the W content when contained is preferably 1.00% or less. If necessary, the W content may be 0.60% or less, 0.40% or less, or 0.20% or less.

### [Ca: 0 to 0.010%]

Ca is an element having an effect of refining inclusions in steel and improving toughness and ductility after quenching. In order to sufficiently exhibit such effects, the Ca content is preferably 0.001 % or more, and more preferably 0.002% or more. Meanwhile, when the Ca content is 0.010% or less, the cost can be suppressed while the effects are sufficiently obtained. Therefore, the Ca content when contained is preferably 0.010% or less, and more preferably 0.004% or less. If necessary, the Ca content may be 0.008% or less, 0.006% or less, or 0.0004% or less.

### [REM: 0 to 0.30%]

Similarly to Ca, REM is an element having an effect of refining inclusions in steel and improving toughness and ductility after quenching. In order to sufficiently exhibit such effects, the REM content is preferably 0.001 % or more, and more preferably 0.002% or more. Meanwhile, when the REM content is 0.30% or less, the cost can be suppressed while the effects are sufficiently obtained. Therefore, the REM content when contained is preferably 0.30% or less, and more preferably 0.20% or less. If necessary, the Ca content may be 0.10% or less, 0.05% or less, or 0.02% or less.

Here, REM refers to 17 elements in total of Sc, Y, and lanthanoids, and the REM content means the total amount of the elements. REM is added to molten steel using, for example, an Fe-Si-REM alloy, which contains, for example, Ce, La, Nd, and Pr.

Remainders other than the above components are Fe and impurities. In addition to the above components, the base steel sheet 11 may contain impurities mixed in a manufacturing step or the like as long as the effects of the present invention are not impaired. Examples of such impurities include Zn (zinc) and Co (cobalt).

In the surface of the plated steel sheet including the base steel sheet 11 having the chemical composition described above and the aluminum-plated layer 12, a portion to which the surface treatment film 13 is applied can be formed into a hot stamping member having a tensile strength of, for example, about 1000 MPa or more by heating and quenching using the hot stamping method. In addition, in the hot stamping method, since press working can be performed in a state of being softened at a high temperature, forming can be easily performed.

### (Manufacturing Method of Aluminum-Plated Steel Sheet for Hot Stamping)

Hereinafter, an example of a manufacturing method of an aluminum-plated steel sheet for hot stamping according to the present embodiment will be described. The manufacturing method of the aluminum-plated steel sheet for hot stamping according to the present embodiment is not particularly limited as long as the aluminum-plated steel sheet has the above-described composition. The following manufacturing method is one example for manufacturing the aluminum-plated steel sheet for hot stamping according to the present embodiment, and is a preferred example of the manufacturing method of the aluminum-plated steel sheet for hot stamping according to the present embodiment.

### <Base Steel Sheet>

The base steel sheet to be subjected to aluminum plating is not particularly limited as long as the base steel sheet is a steel sheet that can be suitably used for the hot stamping method. Examples of the form of the base steel sheet include a steel sheet such as a hot-rolled steel sheet or a cold-rolled steel sheet.

### <Aluminum-Plated Layer>

The aluminum-plated steel sheet for hot stamping according to the present embodiment preferably includes an aluminum-plated layer on at least a portion of one surface or both surfaces of the base steel sheet in which the portion is between the base steel sheet and the surface treatment film. By including the aluminum-plated layer, corrosion resistance after coating after hot stamping can be further improved. In addition, the presence of the aluminum-plated layer can prevent iron scale from being generated by heating during hot stamping. Iron scale becomes a manufacturing load because iron scale contaminates a heating furnace or adheres to a roll used for conveyance. Therefore, when iron scale is generated, a step such as shot blasting is required to remove the iron scale, which is not economically preferable.

The type of the aluminum-plated layer is not particularly limited. Examples of the composition of the aluminum-plated layer include aluminum plating, Al-Si plating, Al-Si-Mg plating, and Al-Si-Ca plating.

For example, a chemical composition (average chemical composition) of the aluminum-plated layer may be a plated layer containing, by mass%, Al: 85.0 to 95.0%, Si: 2.0 to 15.0%, Fe: 1 to 15.0%, Cr: 0% or more and less than 1.0%, Mo: 0% or more and less than 1.0%, Zn: 0% or more and less than 1.0%, V: 0% or more and less than 1.0%, Ti: 0% or more and less than 1.0%, Sn: 0% or more and less than 1.0%, Ni: 0% or more and less than 1.0%, Cu: 0% or more and less than 1.0%, W: 0% or more and less than 1.0%, Bi: 0% or more and less than 1.0%, Mg: 0% or more and less than 1.0%, Ca: 0% or more and less than 1.0%, and remainders which are impurities.

When the Al content in the aluminum-plated layer is less than 85.0%, corrosion resistance after hot stamping (corrosion resistance in a hot-stamped formed body) deteriorates. Therefore, the Al content is preferably 85.0% or more. The Al content is more preferably 88.0% or more. Meanwhile, when the Al content in the aluminum-plated layer is more than 95.0%, plating adhesion may deteriorate. Therefore, the Al content is preferably 95.0% or less. The Al content is more preferably 92.0% or less.

When the Si content in the aluminum-plated layer is less than 2.0%, plating adhesion may deteriorate. Therefore, the Si content is preferably 2.0% or more. The Si content is more preferably 3.0% or more, and still more preferably 4.0% or more. Meanwhile, when the Si content in the aluminum-plated layer is more than 15.0%, plating adhesion may deteriorate. Therefore, the Si content is preferably 15.0% or less. The Si content is more preferably 13.0% or less.

The Fe content is preferably 1.0% or more and 15.0% or less.

The chemical composition of the aluminum-plated layer can be measured by a fluorescent X-ray method based on JIS K 0119:2008. That is, a relationship between an X-ray intensity and the content is obtained in advance using a sample in which the amount of a target element is known. From a calibration curve created based on the obtained relationship, the amount of each element, that is, the chemical composition of an unknown sample can be determined.

An adhesion amount of plating is preferably 10 g/m² to 120 g/m² per one surface. If the adhesion amount is less than 10 g/m², iron scale may be formed in a process of hot stamping if the plated layer has defects. Meanwhile, if the adhesion amount exceeds 120 g/m², the cost increases and it is not economical. Preferably, the adhesion amount is 30 g/m² to 100 g/m².

In addition, examples of the method of forming the aluminum-plated layer include a hot-dip plating method, an electro plating method, physical vapor deposition, chemical vapor deposition, and the like, but the present invention is not particularly limited thereto.

### <Surface Treatment Film>

A manufacturing method of the surface treatment film is not particularly limited, and an example thereof includes a method in which each of film-forming components are mixed and stirred with a disper and a dissolved or dispersed surface treatment agent is coated on the plated layer and dried.

As a raw material of the needle-like compound to be contained in a surface treatment film, a compound having a hexagonal crystal structure in which a proportion of a major axis to a minor axis is 4 or more and 50 or less is used. Examples of the compound having the hexagonal crystal structure include lanthanum silicate, magnesium diboride, beryllium oxide (beryllia), zinc oxide, graphite (C), β-quartz, needle nickel ore (NiS), and wurtzite (ZnS). Among the compounds, graphite (C) having a carbon concentration of 90 mass% is preferably used. The surface treatment film is manufactured using a surface treatment agent in which the raw materials are dispersed in a solvent (for example, water or a solvent). When the proportion of the major axis to the minor axis of the compound to be used is unknown, it may be confirmed by a preliminary test or the like as necessary whether a surface treatment film containing a needle-like compound having a required proportion of the major axis to the minor axis is obtained.

In order to contain 70% or more in number% of the needle-like compounds X1 having the minor axis of 20nm or more, having the proportion of the major axis/the minor axis of 4 to 50, and having a hexagonal crystal structure, and to contain 70% or more in number% of the needle-like compounds X2 having the angle α of 0 degrees or more and 40 degrees or less in the needle-like compounds X1, it is effective to continue stirring in a sodium hydroxide aqueous solution or a liquid obtained by adjusting the pH of ammonium water to 11.0 or more at a liquid temperature of 30 to 50°C for 1 to 7 days. That is, by using a compound having a hexagonal crystal structure as a raw material of the needle-like compound and controlling pH and stirring conditions of the treatment agent to an appropriate range, it is possible to sufficiently increase the proportion of the needle-shaped compounds X1 in which the proportion of the major axis/the minor axis is in a range of 4 to 50 and the proportion of the needle-like compounds X2 in which the angle α is 0 degrees or more and 40 degrees or less (for example, to 70 number% or more).

When using a treatment liquid in which a raw material is dispersed in water or a solvent (acetone or the like), a substrate such as a steel sheet on which a plated layer is applied in advance is coated by the treatment liquid, the water or the solvent is sufficiently dried, and then TEM observation is performed to confirm in advance that the minor axis is 20 nm or more and the proportion of the major axis to the minor axis is 4 to 50. By using the raw material and the manufacturing method screened as such, the surface treatment film mixed with the binder component can be obtained.

Furthermore, in the surface treatment film, in order to increase the proportion of the needle-like compounds X2 in the needle-like compounds X1, the needle-like compounds X2 having a smaller angle α of 0 degrees or more and 40 degrees or less among angles at an intersection point of a straight line parallel to the major axis and a straight line parallel to the plated layer surface, it is effective to perform the above-described method (pH adjustment, liquid temperature, stirring time, and the like), and then, immediately before coating by a treatment liquid in which a raw material is dispersed in water or a solvent, add 40 to 70 g of the treatment liquid to a container having a stirrer and stir the mixture at 80 to 120 rpm, and then coat by the treatment liquid within 5.0 seconds. As described above, it is also possible to perform coating while stirring the container, in which the treatment liquid adjusted to pH 11.0 or more in the container was stirred for 1 day or more.

It is also effective to set a viscosity of the treatment liquid to 3.0 to 10.0 mPa·s and a surface tension to 20 to 60 mN/m. Furthermore, it is also effective to set a time until the temperature of the steel sheet reaches 60°C to 3.0 seconds or more at the time of drying by heating after coating by the treatment liquid.

The manufacturing method of the surface treatment agent is not particularly limited, and an example thereof includes a method in which each of film-forming components are mixed, stirred with a disper, and dissolved or dispersed. In order to improve solubility or dispersibility of each of the film-forming components, a known hydrophilic solvent or the like may be added as necessary. Acid, alkali, or the like may be added to a chemical conversion treatment agent for the base treatment film 14 to adjust pH within a range in which performance of the agent is not impaired.

In order to form the surface treatment film, a plated steel sheet is coated by a surface treatment agent, and a coating film is dried by heating. The coating method of the chemical conversion treatment agent is not particularly limited, and generally known coating methods such as roll coating, air spraying, airless spraying, and immersion can be used. The drying by heating temperature is preferably 50 to 250°C. Below 50°C, the evaporation rate of water is slow and sufficient film formation cannot be achieved, resulting in insufficient antirust power. If the temperature exceeds 250°C, an alkyl portion of a silane coupling agent, which is an organic substance, may be modified due to thermal decomposition or the like, leading to deterioration in adhesion and corrosion resistance. The heating temperature is more preferably 70 to 160°C.

The drying by heating method is not particularly limited, and an example thereof includes a method in which hot blast, induction heating, near infrared light, direct flame, or the like is used alone or in combination.

### (Manufacturing Method of Hot Stamping Member)

Various hot stamping members exemplified as frame components for automobiles can be manufactured using an aluminum-plated steel sheet for hot stamping in which the surface treatment film as described above is applied to the entire surface of at least one surface.

First, the surface treatment film is applied to the entire surface of at least one surface of a metal material such as a coil-like steel sheet. Then, the aluminum-plated steel sheet for hot stamping according to the present embodiment is obtained by performing various processing such as cutting and press punching. In addition, the aluminum-plated steel sheet for hot stamping according to the present embodiment can also be obtained by applying a surface treatment film to a steel sheet which was cut or press-punched. In addition, by partially reducing the film thickness of the surface treatment film, for example, in the application of welding a plurality of steel sheets before hot stamping, energization is facilitated and spot weldability can be improved.

For example, the steel sheet for hot stamping to which the surface treatment film is applied as described above is hot-stamped. Examples of a heating device include an electric heating furnace, a gas heating furnace, a far-infrared furnace, or a normal heating device including an infrared light heater. The surface on the side on which the surface treatment film is provided to increase emissivity has a high heat transfer effect by radiation, and thus the temperature rising rate is high. Therefore, the temperature is rapidly raised to a temperature equal to or higher than an Ac3 point at which a metallographic structure is transformed into an austenite phase. Accordingly, in the manufacturing method of a hot stamping member according to the present embodiment, it is possible to further improve the productivity of the hot stamping member by reducing the heating time. In the present embodiment, specific heating conditions are not particularly limited, and a heating device or the like to be used may be appropriately controlled.

Next, the heated steel sheet is formed and cooled. A portion heated to a temperature equal to or higher than the Ac3 point temperature at which the metallographic structure of the steel material is transformed into the austenite phase is quenched to increase strength. Accordingly, it is possible to obtain a hot stamping member having improved strength by quenching.

### [Examples]

Hereinafter, examples of the present invention will be described, but the conditions in the examples are merely one condition example adopted to confirm the operability and effects of the present invention, and the present invention is not limited to one condition example. The present invention can adopt various conditions as long as the object of the present invention is achieved without departing from the gist of the present invention.

As a base steel sheet, a steel sheet having high mechanical strength (various properties related to mechanical deformation and fracture such as tensile strength, a yield point, elongation, drawing, hardness, an impact value, and fatigue strength) is preferably used. The chemical composition of the base steel sheet before plating used for the steel sheet for hot stamping shown in the following examples is shown in Table 1 below.

**[Table 1]**

| Steel No. | Chemical composition (mass%) remainders: Fe and impurities | | | | | | | | | | | | | | | | | | |
|---|---|---|---|---|---|---|---|---|---|---|---|---|---|---|---|---|---|---|---|
| | C | Si | Mn | P | S | Al | Ti | B | N | Cr | Cu | Ni | Nb | v | Mo | W | Sn | Ca | REM |
| S1 | 0.34 | 0.60 | 1.01 | 0.014 | 0.004 | 0.098 | 0.02 | 0.0025 | 0.004 | - | - | - | - | - | - | - | - | - | - |
| S2 | 0.26 | 0.23 | 0.95 | 0.037 | 0.004 | 0.032 | 0.10 | 0.0087 | 0.005 | 0.21 | - | 0.07 | - | - | - | - | - | - | - |
| S3 | 0.17 | 0.25 | 0.95 | 0.028 | 0.004 | 0.011 | 0.02 | 0.0001 | 0.003 | - | - | - | 0.03 | - | - | - | - | - | - |
| S4 | 0.25 | 0.21 | 2.01 | 0.044 | 0.004 | 0.009 | 0.03 | 0.0100 | 0.004 | 0.23 | 0.007 | 0.02 | - | 0.04 | - | - | - | - | - |
| S5 | 0.27 | 0.03 | 0.90 | 0.015 | 0.010 | 0.013 | 0.02 | 0.0048 | 0.010 | - | - | - | - | - | 0.10 | - | - | - | - |
| S6 | 0.37 | 0.01 | 0.95 | 0.019 | 0.010 | 0.032 | 0.02 | 0.0022 | 0.005 | - | - | - | - | - | - | 0.04 | - | - | - |
| S7 | 0.25 | 0.21 | 0.90 | 0.043 | 0.010 | 0.033 | 0.02 | 0.0029 | 0.008 | - | - | - | - | - | - | - | 0.05 | - | - |
| S8 | 0.33 | 0.12 | 0.50 | 0.038 | 0.008 | 0.039 | 0.04 | 0.0022 | 0.008 | 0.23 | - | - | - | - | - | - | - | 0.002 | - |
| S9 | 0.32 | 0.13 | 0.51 | 0.039 | 0.008 | 0.042 | 0.04 | 0.0022 | 0.008 | - | - | - | - | - | - | - | - | - | 0.10 |
| S10 | 0.30 | 0.14 | 0.53 | 0.038 | 0.009 | 0.043 | 0.04 | 0.0022 | 0.008 | - | - | - | - | - | - | - | - | - | - |

A surface treatment film was applied to a base steel sheet having the chemical composition shown in Table 1 (steel Nos. S1 to S10). More specifically, for each base steel sheet, a steel sheet having a width of 100 mm × a length of 200 mm and a sheet thickness of 1.6 mm was prepared, hot-dip plating was performed in an Al-10%Si plating bath, and then the surface treatment film was applied over the entire surfaces of both surfaces. Here, the notation "-" in Table 1 means that a corresponding element content is 0% in the significant digits (numerical value up to the minimum digit) defined in the present embodiment.

A manufacturing method of a treatment liquid was performed under the conditions shown in Table 2. That is, a powder or a dispersion liquid of lanthanum silicate, magnesium diboride, beryllium oxide, zinc oxide, β-quartz, graphite, or zirconium oxide was used as a solute in water or a solvent, was aged at a predetermined pH, temperature, and stirring time, and then was coated onto an aluminum-plated steel sheet by a roll coater. A time until the temperature reached 60°C when drying in a hot blast furnace was controlled by the wind speed and the temperature in the furnace. Note that, in manufacturing method No. A9, acetone was used as an additive to the treatment liquid.

In manufacturing method Nos. A14 to A16 (corresponding to reference numbers B14 to B16 in Table 3), the surface of an Al-10%Si plated steel sheet was coated by a liquid in which a binder component was dispersed using a roll coater and was dried to provide a surface treatment film. In manufacturing method No. A14, an aqueous treatment liquid to which a compound of SiO₂ was added was used as a binder component, and in manufacturing method No. A15, a liquid in which an acrylic resin was dispersed was used, and in manufacturing method No. A16, a liquid in which a polyurethane resin was dispersed was used.

The film thickness of the surface treatment film was within a range of 1.0 to 10 µm.

Here, an underline in Table 2 indicates that a value is outside the range of suitable manufacturing conditions of the present embodiment.

**[Table 2]**

| Manufacturing method No. | forming step of Surface treatment film | | | | | | | | |
|---|---|---|---|---|---|---|---|---|---|
| | Treatment solution | | | | | | | Treatment solution coating | Drying by heating |
| | Solvent | Solute | pH | Temperature (°C) | Stirring time (hour) | Viscosity (mPa·s) | Surface tension (mN/m) | Time until coating (sec) | 60°C reaching time (sec) |
| A1 | Water | Lanthanum silicate | 11.2 | 40 | 120 | 3.0 | 20 | 5.0 | 3.0 |
| A2 | Water | Magnesium diboride | 11.2 | 40 | 120 | 4.3 | 24 | 2.4 | 4.1 |
| A3 | Water | Beryllium oxide | 11.1 | 40 | 120 | 5.1 | 31 | 3.0 | 4.5 |
| A4 | Water | Zinc oxide | 11.0 | 40 | 120 | 5.2 | 60 | 4.5 | 3.4 |
| A5 | Water | Magnesium diboride | 11.3 | 40 | 120 | 6.1 | 43 | 4.8 | 3.5 |
| A6 | Water | β-quartz | 11.4 | 40 | 120 | 10.0 | 38 | 5.0 | 3.1 |
| A7 | Water | Magnesium diboride | 11.2 | 40 | 120 | 5.1 | 32 | 4.3 | 3.2 |
| A8 | Water | Magnesium diboride | 11.5 | 40 | 120 | 4.1 | 35 | 4.5 | 3.8 |
| A9 | Acetone, Water | Magnesium diboride | 11.5 | 40 | 120 | 5.1 | 21 | 4.2 | 3.4 |
| A10 | Water | Magnesium diboride | 11.0 | 40 | 120 | 4.6 | 35 | 4.2 | 3.1 |
| A11 | Water | Magnesium diboride | 11.3 | 40 | 120 | 5.1 | 21 | 4.5 | 3.2 |
| A12 | Water | Graphite | 11.4 | 40 | 120 | 4.1 | 23 | 4.1 | 3.5 |
| A13 | Water | Graphite | 11.4 | 40 | 120 | 5.5 | 25 | 4.6 | 3.8 |
| A14 | Water | Graphite | 11.2 | 40 | 120 | 4.7 | 31 | 4.5 | 4.1 |
| A15 | Water | Graphite | 11.1 | 40 | 120 | 3.9 | 48 | 4.1 | 4.2 |
| A16 | Water | Graphite | 11.2 | 40 | 120 | 4.4 | 51 | 4.3 | 10.0 |
| A17 | Water | Magnesium diboride | 11.0 | 30 | 72 | 4.6 | 35 | 5.0 | 12.3 |
| a1 | Water | Magnesium diboride | 9.4 | 30 | 24 | 4.1 | 23 | 4.1 | 3.2 |
| a2 | Water | Zirconium oxide | 11.4 | 40 | 120 | 5.1 | 25 | 4.3 | 3.5 |
| a3 | Water | Magnesium diboride | 11.4 | 40 | 120 | 5.1 | 25 | 6.3 | 2.1 |
| a4 | Water | Carbon black | 11.1 | 40 | 48 | 3.2 | 54 | 4.7 | 3.5 |
| a5 | Water | Graphite | 9.3 | 30 | 48 | 3.4 | 21 | 5.0 | 4.5 |
| a6 | Water | Graphite | 11.2 | 25 | 8 | 3.4 | 24 | 4.7 | 4.5 |
| a7 | Water | Graphite | 12.7 | 55 | 240 | 8.7 | 21 | 4.5 | 4.3 |
| a8 | Water | Zinc oxide | 8.2 | 30 | 48 | 3.4 | 24 | 4.1 | 3.2 |
| a9 | Water | Zinc oxide | 11.1 | 22 | 8 | 4.4 | 51 | 4.7 | 4.5 |
| a10 | Water | Zinc oxide | 11.4 | 60 | 240 | 7.7 | 53 | 4.5 | 4.3 |
| a11 | Water | Graphite | 11.4 | 40 | 72 | 4.1 | 23 | 4.1 | 3.5 |
| a12 | Water | Graphite | 11.4 | 40 | 72 | 5.5 | 25 | 4.6 | 3.8 |

Thereafter, a central thermocouple of the steel sheet to which the surface treatment film was applied was connected to enable measurement of the temperature at each position. Then, the steel sheet was heated in an electric heating furnace at a set temperature of 920°C, and when the steel sheet to which the film had been applied reached 910°C, the steel sheet was taken out from the heating furnace. The steel sheet was rapidly cooled with a flat die to obtain a hot stamping member.

The temperature rising rate and adhesion of the surface treatment film were investigated at a portion to which the surface treatment film was applied.

An evaluation method of each evaluation item is described as follows.

### (1) Temperature Rising Rate (Heating Characteristic)

The temperature rising rate in each steel sheet was calculated from a temperature change obtained from the thermocouple provided in each steel sheet and a heating time in the electric heating furnace, and evaluation was performed. Specifically, the average temperature rising rate from room temperature to 910°C was calculated, evaluation was performed based on the following evaluation criteria, and a rating "2" or higher was regarded as a pass.

### (Rating)

5: Temperature rising rate of 5.0 °C/s or more
4: Temperature rising rate of 4.5 °C/s or more and less than 5.0 °C/s
3: Temperature rising rate of 4.0 °C/s or more and less than 4.5 °C/s
2: Temperature rising rate of 3.5 °C/s or more and less than 4.0 °C/s
1: Temperature rising rate 2.0 °C/s or more and less than 3.5 °C/s

### (2) Adhesion of Surface Treatment Film

The obtained hot-stamped formed body was subjected to a phosphoric acid chemical conversion treatment and electrodeposition coating having a thickness of 15 µm, and was baked at 170°C for 20 minutes to provide a surface treatment film. Thereafter, after immersion in deionized water at 60°C for 250 hours, a peeling state of the surface treatment film was confirmed. Rating "2" was regarded as a pass.

### (Rating)

2: Dominant (no peeling)
1: Good (less than 3% peeling in area fraction)

The evaluation results obtained above are shown in Table 3. Note that "carbon concentration of needle-like compound" shown in Table 3 is an average value of the carbon concentration (unit: mass%) of the needle-like compound X2 by EDS analysis.

**[Table 3]**

| Reference number | Manufacturing method No. | Steel No. | Surface treatment film | | | | | | | | Base treatment film | Film | Characteristic evaluation | | Remarks |
|---|---|---|---|---|---|---|---|---|---|---|---|---|---|---|---|
| | | | Needle-like component | | | | | | | Resin | | | Temperature rising characteristic | Film adhesion | |
| | | | Crystal structure | Proportion of needle-like compound X1 (number%) | Proportion of needle-like compound X2 (number%) | Content R (volume%) | Carbon concentration (mass%) | Type | Degree of dispersion (R2/R1) | Content (volume%) | | | | | |
| B1 | A1 | S1 | Hexagonal crystal system | 70 | 70 | 1 | 0 | Lanthanum silicate | 1.3 | 0 | Absence | Absence | 2 | 1 | |
| B2 | A2 | S10 | Hexagonal crystal system | 70 | 80 | 1 | 0 | Magnesium diboride | 1.4 | 0 | Absence | Absence | 2 | 1 | |
| B3 | A3 | S7 | Hexagonal crystal system | 90 | 90 | 1 | 0 | Beryllium Oxide | 1.2 | 0 | Absence | Absence | 2 | 1 | |
| B4 | A4 | S8 | Hexagonal crystal system | 100 | 90 | 1 | 0 | Zinc oxide | 1.5 | 0 | Absence | Absence | 2 | 1 | |
| B5 | A5 | S2 | Hexagonal crystal system | 90 | 100 | 1 | 0 | Magnesium diboride | 1.6 | 0 | Absence | Absence | 2 | 1 | |
| B6 | A6 | S1 | Hexagonal crystal system | 80 | 90 | 1 | 0 | β-quartz | 1.8 | 0 | Absence | Absence | 2 | 1 | |
| B7 | A7 | S5 | Hexagonal crystal system | 90 | 90 | 64 | 0 | Magnesium diboride | 1.5 | 0 | Absence | Absence | 3 | 1 | |
| B8 | A8 | S4 | Hexagonal crystal system | 100 | 80 | 2 | 0 | Magnesium diboride | 1.0 | 0 | Absence | Absence | 3 | 1 | |
| B9 | A9 | S9 | Hexagonal crystal system | 100 | 80 | 5 | 0 | Magnesium diboride | 1.9 | 0 | Absence | Absence | 3 | 1 | Invention example |
| B10 | A10 | S8 | Hexagonal crystal system | 90 | 80 | 10 | 0 | Magnesium diboride | 1.4 | 0 | Absence | Absence | 3 | 1 | |
| B11 | A11 | S3 | Hexagonal crystal system | 70 | 90 | 60 | 0 | Magnesium diboride | 1.5 | 0 | Absence | Absence | 3 | 1 | |
| B12 | A12 | S3 | Hexagonal crystal system | 90 | 90 | 5 | 88 | Graphite | 1.5 | 0 | Absence | Absence | 4 | 1 | |
| B13 | A13 | S7 | Hexagonal crystal system | 80 | 100 | 5 | 90 | Graphite | 1.4 | 0 | Absence | Absence | 5 | 1 | |
| B14 | A14 | S6 | Hexagonal crystal system | 90 | 100 | 8 | 90 | Graphite | 1.6 | 81 | Absence | Absence | 5 | 2 | |
| B15 | A15 | S8 | Hexagonal crystal system | 100 | 90 | 24 | 98 | Graphite | 1.3 | 45 | Absence | Absence | 5 | 2 | |
| B16 | A16 | S9 | Hexagonal crystal system | 90 | 100 | 40 | 97 | Graphite | 2.0 | 40 | Absence | Absence | 5 | 2 | |
| B17 | A17 | S4 | Hexagonal crystal system | 70 | 100 | 10 | 0 | Magnesium diboride | 2.3 | 0 | Absence | Absence | 2 | 1 | |
| B18 | A12 | S3 | Hexagonal crystal system | 90 | 90 | 5 | 88 | Graphite | 1.5 | 0 | Presence | Absence | 4 | 2 | |
| B19 | A13 | S7 | Hexagonal crystal system | 80 | 100 | 5 | 90 | Graphite | 1.4 | 0 | Presence | Presence | 5 | 2 | |
| b1 | a1 | S5 | Hexagonal crystal system | 60 | 80 | 4 | 0 | Magnesium diboride | 1.4 | 0 | Absence | Absence | 1 | 1 | |
| b2 | a2 | S1 | Orthorhombic crystal system | 80 | 80 | 4 | 0 | Zirconium oxide | 1.6 | 0 | Absence | Absence | 1 | 1 | |
| b3 | a3 | S8 | Hexagonal crystal system | 90 | 50 | 6 | 0 | Magnesium diboride | 1.8 | 0 | Absence | Absence | 1 | 1 | |
| b4 | a4 | S6 | Amorphous | 0 | 0 | 0 | - | Carbon black | - | 0 | Absence | Absence | 1 | 1 | |
| b5 | a5 | S4 | Hexagonal crystal system | 60 | 40 | 8 | 89 | Graphite | - | 0 | Absence | Absence | 1 | 1 | |
| b6 | a6 | S3 | Hexagonal crystal system | 0 | 0 | 0 | - | Graphite (Proportion of major axis to minor axis is less than 4) | - | 0 | Absence | Absence | 1 | 1 | |
| b7 | a7 | S2 | Hexagonal crystal system | 0 | 0 | 0 | - | Graphite (Proportion of major axis to minor axis is 50 or more) | - | 0 | Absence | Absence | 1 | 1 | |
| b8 | a8 | S3 | Hexagonal crystal system | 60 | 40 | 0 | - | Zinc oxide | - | 0 | Absence | Absence | 1 | 1 | |
| b9 | a9 | S8 | Hexagonal crystal system | 0 | 0 | 0 | - | Zinc oxide (Proportion of major axis to minor axis is less than 4) | - | 0 | Absence | Absence | 1 | 1 | Comparative example |
| b10 | a10 | S3 | Hexagonal crystal system | 0 | 0 | 0 | - | Zinc oxide (Proportion of major axis to minor axis is 50 or more) | - | 0 | Absence | Absence | 1 | 1 | |
| b11 | a11 | S3 | Hexagonal crystal system | 0 | 0 | 0 | - | Graphite (Proportion of major axis to minor axis is less than 4) | | 0 | Absence | Absence | 1 | 1 | |
| b11 | a11 | S3 | Hexagonal crystal system | 0 | 0 | 0 | - | Graphite (Proportion of major axis to minor axis is less than 4) | - | 0 | Absence | Absence | 1 | 1 | |
| b12 | a12 | S2 | Hexagonal crystal system | 0 | 0 | 0 | - | Graphite (Proportion of major axis to minor axis is 50 or more) | - | 0 | Absence | Absence | 1 | 1 | |

B1 to B19 are invention examples, and b1 to b12 are comparative examples. The grain sizes of the needle-like compounds were all 20 nm to 400 nm.

In the invention examples B1 to B19, the proportion (number%) of the needle-like compound X1 having a proportion of the major axis/the minor axis of 4 to 50 and a hexagonal crystal system to all needle-like compounds (including needle-like compounds in which the proportion is less than 4 and more than 50) was 70% or more, and the proportion (number%) of the needle-like compound X2 having the angle α of 0 to 40 degrees with the surface of the surface treatment film in the needle-like compound X1 was 70% or more. The temperature rising rates (temperature rising characteristics) thereof were rated as 2 or more.

On the other hand, in a comparative example b1, a used compound was inappropriate, and the proportion (number%) of the needle-like compound X1 having the major axis/minor axis ratio of 4 to 50 and the hexagonal crystal system was less than 70%. In a comparative example b2, a used compound was inappropriate, and the crystal structure was not a hexagonal crystal system. In a comparative example b3, a used compound was inappropriate, and the proportion (number%) of the needle-like compound X2 was less than 70%.

In a comparative example b4, a used compound was carbon black, and the used compound was inappropriate. In comparative examples b5 and b8, the proportion (number%) of the needle-like compound X1 and the proportion (number%) of the needle-like compound X2 were less than 70%. In comparative examples b6, b7, b9 and b10 to b12, at least a used compound was inappropriate, and the proportion of the major axis/the minor axis of the needle-like compound X1 was out of the range of 4 to 50. As a result, in the comparative examples b1 to b12, the proportion of the needle-like compound X1 or the proportion of the needle-like compound X2 was low, and the rating of the temperature rising rate was 1.

In addition to the proportion (number%) of the needle-like compound X1 having the proportion of the major axis/the minor axis of 4 to 50 and the hexagonal crystal system, the crystal structure, and the angle α with the surface, the rating of the temperature rising rate was improved to 3 in the invention examples B7 to B12 in which the content R was 2 to 60%.

In B13 in which the carbon concentration of the needle-like compound X1 was 90 mass%, the temperature rising rate was improved as compared with B12, and in the invention examples B12 to B16 using graphite, the rating of the temperature rising rate was further improved as compared with the cases other than graphite.

In the invention examples B14 to B16 containing a resin, the rating of film adhesion was improved from 1 to 2.

The invention example B11 had a better degree of dispersion of the needle-like compound X1 than the invention example B17, and thus had more excellent temperature rising characteristics.

Although the preferred embodiments of the present invention have been described in detail, the present invention is not limited to such examples. It is obvious that a person having ordinary knowledge in the technical field to which the present invention belongs can conceive various changes or modifications within the scope of the technical idea described in the claims, and it is naturally understood that such changes or modifications also belong to the technical scope of the present invention.

### Field of Industrial Application

According to the above aspect of the present invention, it is possible to provide an aluminum-plated steel sheet for hot stamping which can further improve productivity of a hot stamping member, and therefore industrial applicability is high.

### Brief Description of the Reference Symbols

10 Aluminum-plated steel sheet for hot stamping
11 Base steel sheet
12 Aluminum-plated layer
13 Surface treatment film
14 Base treatment film
15 Film

## Claims

1. An aluminum-plated steel sheet for hot stamping, comprising:
a base steel sheet;
an aluminum-plated layer provided on at least one surface of the base steel sheet; and
a surface treatment film provided on the aluminum-plated layer, wherein
the surface treatment film contains needle-like compounds X,
the needle-like compounds X contain 70% or more in number% of needle-like compounds X1 in which a proportion of a major axis to a minor axis of the needle-like compounds X1 is 4 or more and 50 or less and the needle-like compounds X1 have a hexagonal crystal structure, and
the needle-like compounds X1 contain 70% or more in number% of needle-like compounds X2 having a smallest angle of 0 degrees or more and 40 degrees or less among angles formed by a straight line parallel to the major axis and a surface of the aluminum-plated layer.

2. The aluminum-plated steel sheet for hot stamping according to claim 1, wherein a content R of the needle-like compounds X1 is 2% or more and 60% or less in volume%.

3. The aluminum-plated steel sheet for hot stamping according to claim 1 or 2, wherein a carbon concentration of the needle-like compounds X1 is 90 mass% or more.

4. The aluminum-plated steel sheet for hot stamping according to any one of claims 1 to 3, wherein, when the content R of the needle-like compounds X1 is measured at 10 points, a maximum content is defined as R1, and a minimum content is defined as R2, a proportion of R1/R2 is 2.0 or less.

5. The aluminum-plated steel sheet for hot stamping according to any one of claims 1 to 4, wherein the needle-like compounds X1 are graphite.

6. The aluminum-plated steel sheet for hot stamping according to any one of claims 1 to 5, wherein the surface treatment film contains a resin.
